(19) Europäisches Patentamt
European Patent Office
Office européen des brevets

(11) **EP 4 127 093 B1**

(12) **EUROPEAN PATENT SPECIFICATION**

(45) Date of publication and mention of the grant of the patent:
**06.09.2023 Bulletin 2023/36**

(21) Application number: **21719714.4**

(22) Date of filing: **24.03.2021**

(51) International Patent Classification (IPC):
***C09K 5/06*** *(2006.01)*

(52) Cooperative Patent Classification (CPC):
**C09K 5/063**

(86) International application number:
**PCT/IB2021/052444**

(87) International publication number:
**WO 2021/191817 (30.09.2021 Gazette 2021/39)**

(54) **INERT MIXTURE AND ITS USE AS PHASE CHANGE MATERIAL FOR LOW TEMPERATURE APPLICATIONS**

INERTE MISCHUNG UND IHRE VERWENDUNG ALS PHASENAUSTAUSCHMATERIAL FÜR TIEFTEMPERATURANWENDUNGEN

MÉLANGE INERTE ET SON UTILISATION COMME MATÉRIAU À CHANGEMENT DE PHASE POUR DES APPLICATIONS À BASSE TEMPÉRATURE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.03.2020 IT 202000006250**

(43) Date of publication of application:
**08.02.2023 Bulletin 2023/06**

(73) Proprietor: **Groppalli S.r.l.**
**29010 Gragnano (IT)**

(72) Inventors:
• **ROSSO, Mariacristina**
**10136 Torino (IT)**
• **NEGRISOLO, Francesco**
**29010 Agazzano (PC) (IT)**
• **GROPPALLI, Luciano**
**29010 Agazzano (PC) (IT)**

(74) Representative: **Palladino, Saverio Massimo et al Notarbartolo & Gervasi S.p.A.**
**Viale Achille Papa, 30**
**20149 Milano (IT)**

(56) References cited:
**CN-A- 106 221 676     CN-A- 108 410 430**
**CN-A- 110 484 213     US-A1- 2014 311 719**

**Description**

**FIELD OF THE INVENTION**

Thermal energy storage technologies make it possible to accumulate energy from an external source (for example solar energy, but also residual thermal energy of a production process) so that it can then be used, even when the source itself is not available, either for generating electric energy or simply as a heating or cooling medium.

In recent years, various devices have been proposed that can accumulate energy through heat exchange processes.

The invention relates to an inert mixture and use thereof for accumulating thermal energy.

**STATE OF THE ART**

Thermal energy storage technologies respond to the need to allow accumulating energy from an external thermal source so that it can then be used either in processes of conversion to electric energy or in thermal processes as a heating or cooling medium, even when the external source is not available.

These technologies are, for example, used in solar thermal plants to accumulate thermal energy from solar radiation and today represent one of the systems with which efforts are made to reduce the energy dependence of our society from traditional non-renewable resources, such as fossil fuels.

In recent years, various systems have been proposed to accumulate thermal energy. In general, the strategy used is based on the use of a storage medium that stores the thermal energy acquired during the hours of availability of the external source and then makes the energy available during the hours in which the source itself is no longer able to supply it.

Among the main thermal energy storage systems, there are those stocking thermal energy by heating or cooling a storage material from which, subsequently, the stored energy can be regained by heat exchange, in order to heat or cool or to produce electric energy.

Among the most studied and used thermal energy storage materials in recent years, there are phase change materials ("PCM"), which use a phase change process of the material to accumulate thermal energy. The phase change takes place in welldefined and different temperature and pressure ranges for the different types of materials. In practice, PCMs whose phase change is at temperature ranges appropriate for the concerned application are chosen.

The phase change materials that are currently most studied are generally attributable to five distinct categories: that of paraffinic materials, that of fatty acids and esters, that of hydrated salts, that of eutectic mixtures of salts and that of polyols. Octadecyl alcohol, octadecane, octadecanoic acid, paraffin, polyethylene glycol (PEG), pentaerythritol, neopentyl glycol, trimethylolaminomethane, and trimethylolpropane are known phase change materials (see Patent application CN110484213 A).

In this context, International Patent Application No. PCT/IB2019/058478 on behalf of Applicant describes a phase change material comprising an inert mixture comprising:

- at least one polyol selected from the group consisting of: glycerol, erythritol, mannitol, pentaerythritol, xylitol, dulcitol, sorbitol, ribitol, maltitol, and inositol;
- at least one inorganic salt soluble in said polyol, said inorganic salt being of at least one metal selected from the group consisting of: lithium, sodium, potassium, calcium, magnesium, strontium, barium, titanium, vanadium, chromium, manganese, iron, cobalt, nickel, copper, zinc, and aluminum and of at least one anion selected from the group consisting of: a halide, a silicate, and a sulfate; and
- at least one nucleating agent selected from the group consisting of carbon powder, metallic powder, and silicon carbide;

wherein:

- the mole ratio between the at least one polyol and the at least one inorganic salt is in the range from 99:1 to 50:50; and

- the at least one nucleating agent is present in the form of particles having a size in the range from 1 to 50 microns, measured by the laser diffractometry method according to the ISO standard 13320:2009 (E).

The inert mixture according to international patent application No. PCT/IB2019/058478 exhibits in a wide temperature window of use, in the range from - 40°C to 200°C, high phase change energy, as well as high thermal conductivity, high chemical stability, chemical inertness characteristics as well as absence of significant sub-cooling phenomena.

However, the Applicant has perceived that accumulating thermal energy still remains a particularly complex task, requiring the development of new and improved phase change materials, when said accumulation of thermal energy is carried out in the range between 40 and 65°C in the presence of a thermal source of charge not exceeding 65°C. Such conditions are, in particular, those usual in heating and sanitary systems using condensing boilers and/or heat pumps.

In fact, the Applicant has found that the thermal energy storage material currently most used in domestic heating and sanitary systems is water, which, however, has some functional and applicative limitations. In fact, due to the limited thermal range available, the use of water as a thermal energy storage material involves the use of very large tanks. This has a disadvantage in that it requires the installation of large equipment, which takes up space in the home. Moreover, since in this temperature range the water accumulates heat as sensitive heat, during the phase of release of the stocked heat, the temperature at which this is supplied decreases in a manner proportional to the % of heat returned.

In addition to this, the Applicant has found that, although thermal energy storage materials alternative to water exist for said application, such as, for example, paraffin-based phase change mixtures, based on hydrated salts such as, for example, $Mg(SO_4)\cdot 7H_2O$ (melting temperature 48.5°C), $CH_3COONa\cdot 3H_2O$ (melting temperature 58°C), or based on other organic substances such as, for example, fatty acids (stearic acid, palmitic acid), they too may have certain technological and functional limitations.

In particular, the Applicant noted that paraffins have extremely low solid phase thermal conductivity values, which makes heat recovery from these materials particularly slow. The Applicant also observed that the slow heat recovery is a marked disadvantage for use in installations where high heat output is required, such as heating and sanitary installations using condensing boilers and/or heat pumps.

As far as hydrated salts are concerned, the Applicant has noted that said materials are not stable, but subject to degradation phenomena over time as the number of cycles of use increases, thus making their use in domestic heating and sanitary systems difficult and in any case less economically advantageous, due to the need to regularly replace the materials now exhausted with new ones. In addition, these salts have the further disadvantage of being corrosive, which increases the risk of breakage and failure caused by wear and tear of the equipment containing them.

Finally, the Applicant also noted that other organic substances, such as fatty acids, have low thermal conductivity values, which makes heat recovery from these materials particularly slow, high costs and chemical reactivity that does not allow them to operate in a mixture in most cases, which makes their use problematic and inefficient.

The primary aim of the present invention is therefore to identify a new type of materials capable of reducing and/or solving the above mentioned drawbacks, and in particular capable of being used for accumulating thermal energy in the range between 40 and 65°C in the presence of a thermal source of charge not exceeding 65°C, necessary for example in heating and sanitary systems that make use of condensing boilers and/or heat pumps, as well as in the industrial, building and air conditioning sectors.

## SUMMARY OF THE INVENTION

In accordance with the present invention, the Applicant has surprisingly found that these desired characteristics can be achieved by arranging an inert mixture comprising at least one polyether selected from the group consisting of polyethylene glycol (PEG), and methoxy polyethylene glycol and at least one hydroxylated compound selected from the group consisting of: trimethylolpropane, menthol, neopentyl alcohol, and guaiacol, wherein the weight ratio of the at least one polyether to the at least one hydroxylated compound is maintained within a specified range.

Therefore, in a first aspect thereof the present invention relates to an inert mixture comprising:

a. from 45% to 99% by weight, with respect to the total weight of the inert mixture, of at least one polyether selected from the group consisting of polyethylene glycol (PEG), and methoxy polyethylene glycol; and

b. from 1 to 16% by weight, with respect to the total weight of the inert mixture, of at least one hydroxylated compound selected from the group consisting of: trimethylolpropane, menthol, neopentyl alcohol, and guaiacol.

In fact, it has been surprisingly found that by arranging such an inert mixture, in which at least one polyether as defined herein and at least one hydroxylated compound as defined herein are present in a specific range of weight ratios, it is possible to obtain a material capable of reducing and/or solving the above-mentioned drawbacks of the usually used phase change materials such as water, paraffinic compounds, salt hydrates, or other organic compounds such as fatty acids. In fact, the inert mixture has a suitable window of temperature of use, from 40°C to 65°C, a maximum melting temperature of 60 - 65°C, and a limited hysteresis range of the inert mixture according to the present invention, and in particular less than the hysteresis range of the at least one polyether used alone, with consequent improvement in the usability of the returned heat. This implies that, for the same temperature of thermal energy accumulation, the same is then on average released (i.e. returned) at a higher temperature than materials with a higher hysteresis range.

The inert mixture according to the present invention also has further advantages such as thermal conductivity values markedly greater than the thermal conductivity of the at least one polyether used alone, as well as a phase change energy comparable to that of the at least one polyether alone, high chemical stability, chemical inertness characteristics and a reduction in melting/crystallization hysteresis compared to the at least one polyether used alone.

All these properties are particularly important when a limited temperature thermal source is available, as usually happens in heating and sanitary systems that use condensing boilers and/or heat pumps.

In a further aspect thereof, the present invention also relates to the use of the inert mixture according to the present invention to accumulate thermal energy.

Thanks to the aforementioned properties, in fact, the inert mixture according to the present invention can be effectively used for accumulating thermal energy, especially in heating and sanitary systems that make use of condensing boilers and/or heat pumps.

In a preferred embodiment of said aspect, the present invention relates to the use of the inert mixture according to the present invention as a phase change material.

Thanks to the specific combination of components thereof, the inert mixture according to the present invention in fact has at least one phase transition in a window of temperatures normally used in thermal energy storage devices, which makes the use thereof as a phase change material particularly advantageous. Advantageously, the inert mixture according to the present invention has at least one phase transition in the temperature range from 40 °C to 65 °C.

**BRIEF DESCRIPTION OF THE DRAWINGS**

In the drawings:

- figure 1 shows the experimental apparatus used to evaluate the thermal properties in the examples of the present application;

- figure 2 shows the time/Temperature curve for the sample PEG 4000 according to Reference example 1;

- figure 3 shows the time/Temperature curve for the mixture according to Example 1;

- figure 4 shows the time/Temperature curve for the mixture according to Example 2; and

- figure 5 shows the time/Temperature curve for the mixture according to Example 3.

**DETAILED DESCRIPTION OF THE INVENTION**

The present invention may shown in one or more of its aspects one or more of the preferred characteristics reported below, which can be combined with one another as preferred according to the application requirements.

Within the scope of the present invention a new type of material has been identified whose energy characteristics linked to a phase change, make the use thereof particularly effective as a phase change material, in particular for applications related to accumulating thermal energy.

Therefore, in a first aspect thereof the present invention relates to an inert mixture comprising:

a. from 45% to 99% by weight, with respect to the total weight of the inert mixture, of at least one polyether selected from the group consisting of polyethylene glycol (PEG), and methoxy polyethylene glycol (mPEG); and

b. from 1 to 16% by weight, with respect to the total weight of the inert mixture, of at least one hydroxylated compound selected from the group consisting of: trimethylolpropane, menthol, neopentyl alcohol, and guaiacol.

In the present invention when the definition is used:

- "Inert mixture" it is meant a mixture which under its normal conditions of use does not give rise to chemical reactions among its components;

- "Normal conditions of use" it is meant a window of temperatures in the range of Phase change temperature 40°C to Phase change temperature 65°C; and

- "Inorganic salt" it is meant an ionic compound comprising one or more mono- or polyvalent cations and one or more mono- or polyvalent anions, in which said cations and anions are both of an inorganic nature.

- "Hysteresis range" it is meant the temperature difference between the thermal energy storage temperature (accompanied by melting of the phase change material) and the thermal energy release temperature (accompanied by melting of the phase change material).

Without wishing to be bound to a specific theory, it is believed that thanks to the specific physical interaction between the two types of components of the mixture according to the present invention, a material is obtained having characteristics of usability window, hysteresis range, thermal conductivity, phase change energy, chemical stability, characteristics of chemical inertia, which make it particularly effective to be used as a phase change material and in applications related to accumulating thermal energy, for example in heating and sanitary systems using condensing boilers and/or heat pumps, as well as in the industrial, building and air conditioning sectors.

The inert mixture according to the present invention comprises at least one polyether selected from the group consisting of polyethylene glycol (PEG), and methoxypolyethylene glycol (mPEG).

Preferably, the inert mixture according to the present invention comprises from 55 % by weight to 95 % by weight, more preferably from 60 % by weight to 95 % by weight of said at least one polyether.

Preferably, said at least one polyether has an average molecular weight in the range from 2000 to 10000 Da.

In a preferred embodiment of the present invention, said at least one polyether is polyethylene glycol (PEG).

In a further preferred embodiment of the present invention, said at least one polyether is methoxy polyethylene glycol (mPEG).

In a still further preferred embodiment of the present invention, said at least one polyether consists of a mixture of polyethylene glycol (PEG) and methoxy polyethylene glycol (mPEG).

Types of polyethylene glycol (PEG) and methoxy polyethylene glycol (mPEG) that can be used in the inert mixture according to the present invention are commercially available, and generally marketed under conventional names such as PEG xxx or mPEG xxx, where xxx denotes the average molecular weight of the polymer. Commercial grades of PEG and mPEG are Carbowax™, polyethylene glycol PEG(4000) manufactured by Dow Chemical Company, polyethylene glycol 4000 manufactured by Merck Millipore.

The inert mixture according to the present invention comprises at least one hydroxylated compound selected from the group consisting of: trimethylolpropane, menthol, neopentyl alcohol, and guaiacol.

Preferably, said at least one hydroxylated compound is trimethylolpropane.

Preferably, the inert mixture according to the present invention comprises at least one polyol selected from the group consisting of: erythritol, mannitol, pentaerythritol, xylitol, dulcitol, sorbitol, ribitol, maltitol, and inositol.

Preferably, the at least one polyol is selected from the group consisting of: erythritol, mannitol, xylitol, sorbitol, ribitol, maltitol, and inositol.

The Applicant has found that the addition of one or more of the polyols listed above contributes positively to the properties of the inert mixture according to the present invention, further increasing its heat capacity and allowing the value of the melting and crystallization temperature thereof to be regulated.

Preferably, when present, said at least one polyol is present in the inert mixture according to the present invention in an amount in the range of 1 to 15 % by weight, with respect of the total weight of said inert mixture. More preferably, said at least one polyol is present in an amount in the range from 1 to 10 % by weight, with respect of the total weight of said inert mixture.

The Applicant has found that the amount of said at least one polyol defined above is particularly effective in increasing the heat capacity of the inert mixture according to the present invention and in regulating the values of the melting and crystallization temperature thereof. At the same time, the Applicant has also found that amounts of said at least one polyol higher than 15%, although still usable, can give rise to immiscibility phenomena between compounds of the mixture in solid phase with solid/liquid phase transition of a part of the mixture outside the temperature range of interest, thus making its properties less desirable and functional.

Preferably, the inert mixture according to the present invention comprises at least one inorganic salt, said inorganic salt being of at least one metal selected from the group consisting of: lithium, sodium, potassium, calcium, magnesium, strontium, barium, titanium, vanadium, chromium, manganese, iron, cobalt, nickel, copper, zinc, and aluminum and of at least one anion selected from the group consisting of: a halide, a silicate, and a sulfate.

Advantageously, said at least one inorganic salt is soluble in the at least one polyol according to the invention.

In the context of the present invention, the expression "inorganic salt soluble in said polyol" means an inorganic salt capable of forming, when added to at least one polyol according to the present invention in an amount of at least 2% by weight with respect to the sum of the weight of salt and polyol, with said polyol a molten mixture in homogeneous phase, after heating up to a temperature at least equal to the melting temperature of said mixture.

Preferably, the at least one metal is selected from the group consisting of: lithium, sodium, potassium, strontium, barium, titanium, vanadium, chromium, manganese, iron, cobalt, nickel, and copper. More preferably, the at least one metal is selected from the group consisting of: lithium, sodium, potassium, and iron.

Preferably, in the inert mixture according to the present invention the anion of the at least one inorganic salt according to the invention is selected from the group consisting of: a halide, and a sulfate, more preferably selected from the group consisting of: a halide.

In a particularly preferred embodiment, the at least one inorganic salt is a chloride or a sulfate of at least one metal selected from the group consisting of: lithium, sodium, potassium. Examples of said at least one inorganic salt according to said particularly preferred embodiment are: lithium chloride, lithium sulfate, sodium chloride, potassium chloride, sodium sulfate, potassium sulphate.

Other inorganic salts advantageously usable in the mixture according to the invention are magnesium chloride and calcium chloride.

Preferably, the at least one inorganic salt according to the present invention has a melting enthalpy equal to or greater than 110 kJ/kg.

Indeed, the Applicant has found that the use of one or more of said inorganic salts enables an increase in the thermal capacity of the inert mixture according to the present invention.

Preferably, when present said at least one inorganic salt is present in the inert mixture according to the present invention in an amount in the range from 1 to 15 % by weight, with respect of the total weight of said inert mixture. More preferably, said at least one inorganic salt is present in an amount in the range from 2 to 10 % by weight, with respect of the total weight of said inert mixture.

The Applicant has found that the amount of said at least one inorganic salt defined above is particularly effective in increasing the heat capacity of the inert mixture according to the present invention. At the same time, the Applicant has also found that amounts of said at least one inorganic salt higher than 15%, although still usable, may give rise to insolubility phenomena in the mixture, thereby rendering its properties less desirable and functional.

Preferably, the inert mixture according to the present invention comprises at least one nucleating agent selected from the group consisting of carbon powder, metallic powder, and silicon carbide.

Although the inert mixture according to the present invention does not have significant sub-cooling phenomena under normal conditions of use, the inert mixture can advantageously comprise at least one nucleating agent, so as to further improve the characteristics of the phase change, such as for example the crystallization kinetics and the global thermal conductivity value thereof.

At least one nucleating agent selected from the group consisting of carbon powder, metallic powder, and silicon carbide. Preferably, said carbon powder is selected from the group consisting of: graphite, carbon black, graphene, nanotubes.

When present, the at least one nucleating agent is in the form of particles having a size in the range from 1 to 50 microns, more preferably in the range from 5 to 20 microns, measured by the laser diffractometry method according to the ISO standard 13320:2009 (E).

Preferably, the at least one nucleating agent is present in an amount in the range from 2% to 20% by weight, more preferably in the range from 5% to 10% by weight, with respect to the total weight of the inert mixture.

Said amount has in fact been found to be optimal for obtaining an increase in the crystallization kinetics and in the thermal conductivity value of the inert mixture.

Advantageously, the inert mixture according to the present invention shows phase transition enthalpy values that make the use thereof particularly effective as a phase change material in applications related to accumulating thermal energy in heating and sanitary systems that make use of condensing boilers and/or heat pumps, as well as in the industrial, building and air conditioning sectors.

Preferably the inert mixture according to the present invention has a phase transition enthalpy equal to or greater than 110 kJ/kg, more preferably equal to or greater than 150 kJ/kg. Said enthalpy value can be determined by means of a calorimetric measurement using a differential scanning calorimeter, provided with a measuring chamber in nitrogen flow (nitrogen flow = 15 mL/min) and operating at an up and down ramp speed of 2°C/min.

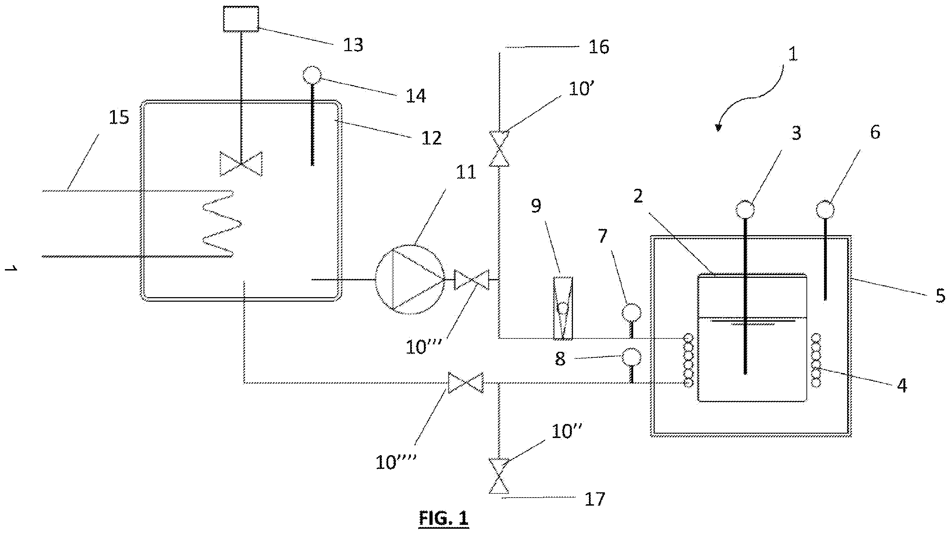

An instrument suitable for carrying out such a measurement is, for example, the apparatus shown in figure 1 and described in detail in its conformation and in its operation later in Reference example 1, with which it is possible to observe the behaviour of a sample with a mass much higher than that which can be analysed by a normal DSC apparatus, thus significantly improving the reliability of the measurement.

In fact, it has been unexpectedly found that said value of enthalpy of phase transition is particularly suitable for applications of the inert mixture according to the present invention in the sector of thermal energy storage technologies, in particular in the sector of heating and sanitary systems that make use of condensing boilers and/or heat pumps, as well as in the industrial, building and air conditioning sectors.

Thanks to the specific combination of the above-mentioned types of components, the inert mixture according to the present invention exhibits at least one phase transition in a temperature window in the range between 40 °C and 65 °C, i.e. under the normal conditions of use of thermal energy storage devices in the sector of heating and sanitary systems making use of condensing boilers and/or heat pumps, as well as in the building and air conditioning sectors.

Preferably, the inert mixture according to the present invention has at least one phase transition in the temperature range from 40 °C to 65 °C.

Preferably the at least one phase transition is of the solid-liquid or solid-solid type.

The mixture according to the present invention may be prepared by any method known to the skilled in the art, whereby the components of said mixture may be mixed.

In a further aspect thereof, the present invention relates to the use of the inert mixture according to the present invention for accumulating thermal energy.

Thanks to the aforementioned properties, in fact, the inert mixture according to the present invention is effectively usable for accumulating thermal energy.

The inert mixture according to the present invention, thanks to its characteristics, allows accumulating large amounts of thermal energy and then makes it available in a controllable manner, for example by means of heat exchange.

In other words, in the context of this aspect the present invention relates to a method for accumulating thermal energy which envisages the use of the inert mixture according to the present invention.

Preferably, in said use, the inert mixture according to the present invention accumulates thermal energy in a temperature window comprised between 40 °C and 65 °C.

In a preferred embodiment of said aspect, the present invention relates to the use of the inert mixture according to the present invention as a phase change material.

Thanks to the specific combination of its components, the inert mixture according to the present invention has at least one phase transition in a temperature window normally used in thermal energy storage devices in the sector of domestic heating and sanitary systems, for example condensing boilers and/or heat pumps, as well as in the industrial, building and air conditioning sectors, which makes the use thereof as a phase change material particularly advantageous. Advantageously, the inert mixture according to the present invention has at least one phase transition in the temperature range from 40 °C to 65 °C.

## EXPERIMENTAL PART

The invention is now shown by means of some Examples to be considered for exemplary and non-limiting purposes thereof.

Reference Example 1

A sample of technical grade PEG 4000 produced by Lotte Chemical was subjected to density analysis at 25°C, using a 100 ml graduated cylindrical container with a support base and a subdivision equal to 1 ml in Pyrex glass suitable to withstand temperature changes.

The sample weighed on digital scales (Steinberg Systems SBS-LW-7500A) with an accuracy of 0.1 g was placed in the graduated container, appropriately heated until the sample was completely melted inside a thermostatically controlled stove and brought back to room temperature with a ramp of 2 °C/min to allow the sample to compact at the bottom of the graduated container.

At room temperature, the value of the volume occupied by the sample was read on the graduated scales and thus the density was calculated using the standard formula for defining the physical quantity density, according to equation (I):

$$\rho = Mass/Volume \quad (I)$$

This procedure was used to calculate all sample densities.

Table 1 shows the density value ($\rho$) obtained.

100 grams of the same PEG 4000 sample were also subjected to thermal characterization, using the apparatus depicted in Figure 1.

The apparatus of figure 1 consists of a high thermal conductivity container (2) provided with a temperature sensor (3) and a thermoregulation coil (4) on the outer wall containing the mixture under test (1).

The container (2) is contained in a second container (5) suitably insulated and provided with a temperature sensor (6). The latter is also provided with the necessary passages to allow the thermostating liquid to reach and return from the coil (4).

The external circuit is made with:

- a thermostatically controlled tank (12) provided with a mechanical agitator (13) and a temperature sensor (14) maintained at the set temperature by means of an electric resistance (15);

- a recirculation pump (11);

- 4 flow shut-off valves (10', 10", 10''', 10'''');

- a coolant inlet (16) and corresponding outlet (17);

- a flow meter (9) for reading/regulating the thermostat fluid; and

- two temperature sensors to detect the ∆T between the fluid inlet and outlet (7 and 8).

All temperature sensors (3), (6), (7), (8), (14) used are J-type thermocouples manufactured by Tersid srl (Milan, Italy) while the flow meter (9) is a Heinrichs TMU010-S coriolis effect with 4 - 20 mA output. Both the temperature sensors and the flow meter are connected to a Keysight 34972A data logger.

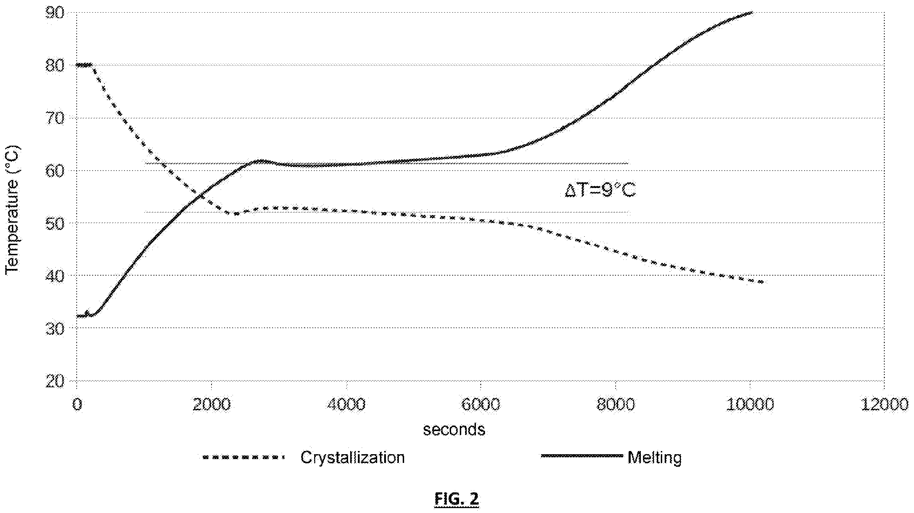

The acquisition of the signals from the temperature sensors and from the flow meter is carried out by means of a multi-channel board model 34901A inserted in the datalogger and the data recording is performed on files in CSV format by means of the "Keysight BenchLink Pro" software of the control computer. The acquired file is then processed to obtain the time/Temperature curves shown in figures 2-5, using libreoffice Calc software (version 6.0).

The characterization of the PEG 4000 sample was carried out by placing 100 g of sample in the appropriately sealed container (1). It was then proceeded to pre-heat the tank (12) by means of the resistance (15) provided with a manual thermostat up to a temperature of 85°C in order to have a heat transport fluid at a constant temperature. Through the valves (10''' and 10'''') the heating circuit was opened and the circulation pump (11) was activated. Using a needle valve built into the flow meter (9), the fluid flow rate was regulated to 3 litres/minute to begin characterization.

Using the thermocouple (3), the temperature of the heating sample was recorded over time, which was then reported in the time/Temperature curve in Figure 2 as the melting (Melting) curve.

At the same time, the temperatures (7) and (8) were acquired from which it was possible to derive the ∆T of the thermal transport fluid and the instantaneous flow rate (9). In this case, water was used as the transport fluid so it is possible to calculate the energy accumulated by the sample as the integral of the power transferred from the fluid to the mixture, according to equation (II):

$$\Delta Hmelt = \int (T_8 - T_7) \cdot M_9 \cdot Cp_{H_2O} \qquad (II)$$

wherein

$\Delta H_{melt.}$ is the melting enthalpy of the sample;
Ts is the outlet temperature of the thermal fluid after exchange with container 1 (temperature sensor 8);
$T_7$ is the inlet temperature of the thermal fluid before exchange with container 1 (temperature sensor 7);
$M_9$ is the flow rate recorded by the coriolis effect flow meter with needle tap for manual regulation of the fluid flow rate by changing the pressure drop of the circuit (flow meter 9); and
$Cp_{H_2O}$ is the value of the heat capacity of the water at the mean temperature (Tm) of the thermal fluid, determined using formula (IV):

$$Tm = (T_8 + T_7)/2 \qquad (IV)$$

determined by formula (V):

$$Cp_{H2O} = 1.1922 \cdot 10^{-5} \cdot Tm^2 - 0.001013 \cdot Tm + 4.2014 \qquad (V)$$

with $Cp_{H2O}$ expressed in kJ/(kg K), and obtained from literature data (Perry's Chemical Engineers' Handbook, 9th Edition).

For the measurement of the cooling curve it was proceeded with turning off the resistance (15) and through the valves (10''', 10''''), the heating circuit was excluded after stopping the pump (11) by inserting the cooling flow (16) (17) (10') and (10") consisting of a circuit of network water.

From these time-dependent data it was again possible to plot the Mixture temperature/time curve in the crystallization (Crystallization) phase 2) and to calculate, similarly to what was done for the heating curve, the enthalpy of crystallization, using equation (III):

$$\Delta Hcrist. = \int (T_8 - T_7) \cdot M_9 \cdot Cp_{H_2O} \qquad (III)$$

wherein:

$\Delta H_{cryst.}$ is the enthalpy of crystallization of the sample;
Ts is the outlet temperature of the thermal fluid after exchange with container 1 (temperature sensor 8);
$T_7$ is the inlet temperature of the thermal fluid before exchange with container 1 (temperature sensor 7);
$M_9$ is the flow rate recorded by the coriolis effect flow meter with needle tap for manual regulation of the fluid flow rate by changing the pressure drop of the circuit (flow meter 9); and
$CpH_2O$ is the value of the thermal capacity of the water at the average temperature (Tm) of the thermal fluid, determined using formulae (IV) and (V) reported above.

Figure 2 shows the time/Temperature curve obtained and Table 1 shows the data of melting temperature (Tmelt), crystallization temperature (Tcryst), melting enthalpy (ΔHmelt), and enthalpy of crystallization (AHcryst) obtained through said characterization.

Example 1

85 grams of PEG 4000 (technical grade PEG 4000 manufactured by Lotte Chemical) and 15 grams of trimethylolpropane (technical grade manufactured by Perstorp) were fed to a container provided with an agitator and suction system. The mixture was then stirred and heated to a temperature of 80°C under vacuum, progressively bringing the residual pressure in the container to values less than 100 mBar, and then maintaining said vacuum degree for 20 minutes.
Subsequently, the mixture was cooled to room temperature while maintaining a vacuum and then atmospheric pressure (1 bar absolute) was restored.
The resulting mixture was subjected to density analysis and thermal characterization using the apparatus in Figure 1, under the same measurement conditions used in Reference Example 1.

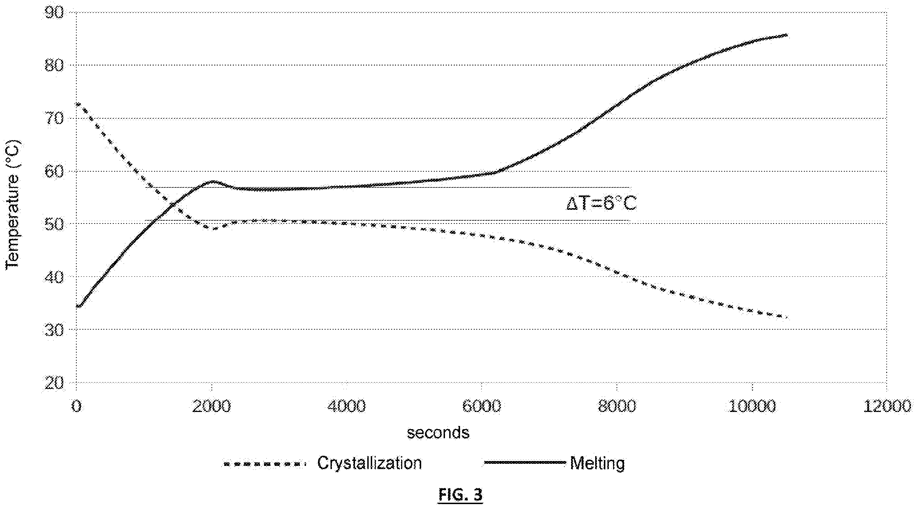

Figure 3 shows the time/Temperature curve obtained and Table 1 shows the data obtained through said characterizations, in comparison with the data obtained in Reference Example 1.

Example 2

67 grams of PEG 4000 (technical grade PEG 4000 manufactured by Lotte Chemical) and 15 grams of trimethylolpropane (technical grade manufactured by Perstorp) were fed to a container provided with an agitator and suction system. The mixture was then stirred and heated to a temperature of 80°C under vacuum, progressively bringing the residual pressure in the container to values less than 100 mBar, and then maintaining said vacuum degree for 20 minutes.
Subsequently, the mixture was cooled to room temperature while maintaining a vacuum and then atmospheric pressure (1 bar absolute) was restored.
Subsequently, 82 grams of the thus obtained mixture was fed to a container provided with an agitator and suction system, together with 5 grams of erythritol (food grade 99% (QINGDAO BOZEWON INTERNATIONAL TRADE CO.)), 4 grams of sodium chloride (pharmaceutical grade with purity ≥ 99% (Merck)) and 9 grams of graphite (MG1596 - Sinograf). The mixture was then stirred and heated to a temperature of 80°C under vacuum, progressively bringing the residual pressure in the container to values lower than 100 mBar, and then maintaining said vacuum degree for 60 minutes.
The thus obtained mixture was subjected to density analysis and thermal characterization using the apparatus in Figure 1, under the same measurement conditions used in Reference Example 1.

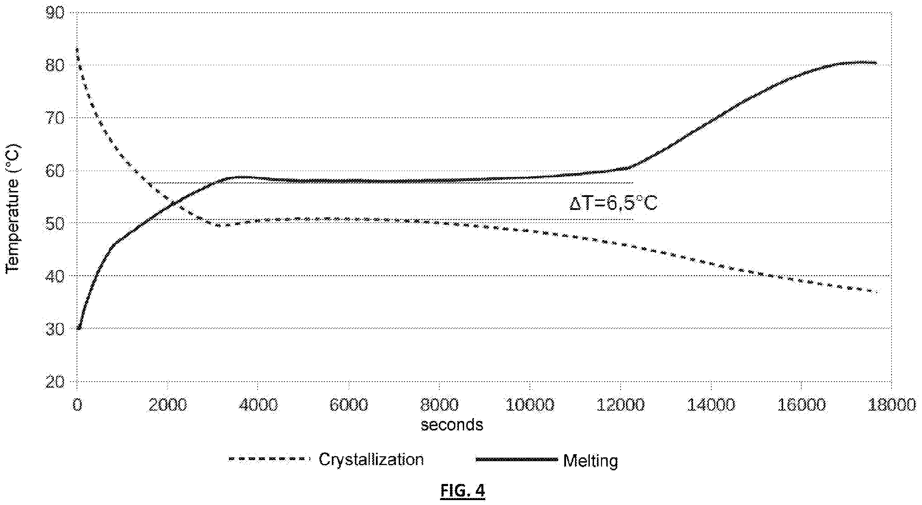

Figure 4 shows the time/Temperature curve obtained and Table 1 shows the data obtained through said characterizations, in comparison with the data obtained in Reference Example 1.

Example 3

76 grams of PEG 4000 (technical grade PEG 4000 produced by Lotte Chemical) and 15 grams of menthol (pharmaceutical grade with purity ≥ 99% (Merck Millipore)) were fed to a container provided with an agitator and suction system. The mixture was then stirred and heated to a temperature of 65°C under vacuum, progressively bringing the residual pressure in the container to values lower than 100 mBar, and then maintaining said vacuum degree for 20 minutes.

Subsequently, the mixture was cooled to room temperature while maintaining a vacuum and then atmospheric pressure (1 bar absolute) was restored.

Subsequently, 91 grams of the thus obtained mixture was fed to a container provided with an agitator and suction system, together with 9 grams of graphite (MG1596 - Sinograf). The mixture was then stirred and heated to a temperature of 60°C under vacuum, progressively bringing the residual pressure in the container to values lower than 100 mBar, and then maintaining said vacuum degree for 60 minutes.

The thus obtained mixture was subjected to density analysis and thermal characterization using the apparatus in Figure 1, under the same measurement conditions used in Reference Example 1.

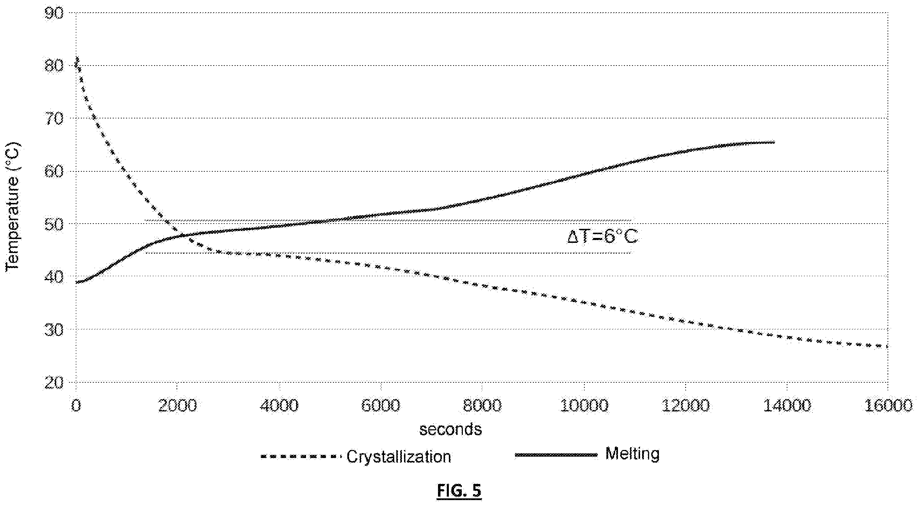

Figure 5 shows the time/Temperature curve obtained and Table 1 shows the data obtained through said characterizations, in comparison with the data obtained in Reference Example 1.

TABLE 1

|  | ρ (kg/l) | Tmelt. (°C) | Tcryst. (°C) | ΔHmelt. (kJ/kg) | ΔHcryst. (kJ/kg) |
|---|---|---|---|---|---|
| **Reference Example 1** | 1.12 | 59-63 | 52-50 | 180-190 | 170-180 |
| **Example 1** | 1.07 | 57 -59 | 51 - 49 | 173-183 | 165-175 |
| **Example 2** | 1.20 | 57.5 -59.5 | 51-49 | 173-183 | 165-175 |
| **Example 3** | 1.19 | 48 -51.5 | 44-41 | 171 - 179 | 162-171 |

As it can be seen from the analysis of the data of Table 1 and the comparison of Figures 2-5, the characterizations performed allowed to highlight that all the inert mixtures according to the present invention according to Examples 1-3, present usability window characteristics in the range between 40 and 65°C in the presence of a thermal source of charge not exceeding 65°C, and phase change energies ΔHf and ΔHc comparable to those of the polyether alone according to Reference example 1. In addition to this, the inert mixtures according to the present invention according to Examples 1-3 have hysteresis range values of 6°C, 6.5°C and 6°C, respectively, as also shown in Figures 1-3 by the symbol ΔT, which identifies the temperature difference recorded between the melting temperature and the crystallization temperature of the mixtures. Said value of the hysteresis range is found to be lower than the hysteresis range of the polyether alone according to Reference Example 1, resulting in an improvement in the usability of the returned heat of the mixtures according to the present invention compared to the use of the polyether alone according to Reference example 1.

Moreover, the mixture according to Example 2, thanks to the presence of additional and optional components such as erythritol, sodium chloride and graphite, additionally showed an increase in the thermal capacity of the inert mixture, as highlighted by the increased duration of the flat zone in the phase transition, further improving the performance of said mixtures.

**Claims**

1. An inert mixture comprising:

   a. from 45% to 99% by weight, with respect to the total weight of the inert mixture, of at least one polyether selected from the group consisting of polyethylene glycol (PEG), and methoxy polyethylene glycol (mPEG); and
   b. from 1 to 16% by weight, with respect to the total weight of the inert mixture, of at least one hydroxylated compound selected from the group consisting of: trimethylolpropane, menthol, neopentyl alcohol, and guaiacol.

2. The inert mixture according to claim 1, wherein said at least one polyether has an average molecular weight in the range from 2000 to 10000 Da.

3. The inert mixture according to claim 1 or 2, wherein said at least one hydroxylated compound is trimethylolpropane.

4. The inert mixture according to any one of claims from 1 to 3, comprising at least one polyol selected from the group consisting of: erythritol, mannitol, pentaerythritol, xylitol, dulcitol, sorbitol, ribitol, maltitol, and inositol.

5. The inert mixture according to claim 4, wherein said at least one polyol is present in an amount in the range from 1 to 15% by weight, with respect to the total weight of said inert mixture.

6. The inert mixture according to any one of claims from 1 to 5, comprising at least one inorganic salt, said inorganic salt being of at least one metal selected from the group consisting of: lithium, sodium, potassium, calcium, magnesium, strontium, barium, titanium, vanadium, chromium, manganese, iron, cobalt, nickel, copper, zinc, and aluminum and of at least one anion selected from the group consisting of: a halide, a silicate, and a sulphate.

7. The inert mixture according to claim 6, wherein said at least one inorganic salt is present in an amount in the range from 1 to 15% by weight, with respect to the total weight of said inert mixture.

8. The inert mixture according to any one of claims from 1 to 7, comprising at least one nucleating agent.

9. The inert mixture according to claim 8, wherein said nucleating agent is selected from the group consisting of carbon powder, metallic powder, and silicon carbide.

10. The inert mixture according to claim 8 or 9, wherein the at least one nucleating agent is present in the form of particles having a particle size in the range from 1 to 50 micron, measured by the laser diffractometry method according to the standard ISO 13320: 2009 (E).

11. The inert mixture according to claim 10, wherein the at least one nucleating agent is present in the form of particles having a size in the range from 5 to 20 micron.

12. The inert mixture according to any of claims from 8 to 11, wherein the at least one nucleating agent is present in an amount in the range from 2% to 20% by weight, with respect to the total weight of the inert mixture.

13. Use of the inert mixture according to any one of claims from 1 to 12 to accumulate thermal energy.

14. Use of the inert mixture according to any one of claims from 1 to 12, to accumulate thermal energy in a temperature range from 40° C to 65° C.

15. Use of the inert mixture according to any one of claims from 1 to 12 as phasechange material.


**Patentansprüche**

1. Inertes Gemisch umfassend:

   a. 45 bis 99 Gew.-%, bezogen auf das Gesamtgewicht des inerten Gemisches, mindestens eines Polyethers, das aus der Gruppe bestehend aus Polyethylenglykol (PEG) und Methoxypolyethylenglykol (mPEG) ausgewählt wird; und
   b. 1 bis 16 Gew.-%, bezogen auf das Gesamtgewicht des inerten Gemisches, mindestens einer hydroxylierten Verbindung, die aus der Gruppe bestehend aus: Trimethylolpropan, Menthol, Neopentylalkohol und Guajakol ausgewählt wird.

2. Inertes Gemisch nach Anspruch 1, wobei der mindestens eine Polyether ein durchschnittliches Molekulargewicht im Bereich von 2000 bis 10000 Da aufweist.

3. Inertes Gemisch nach Anspruch 1 oder 2, wobei die mindestens eine hydroxylierte Verbindung Trimethylolpropan ist.

4. Inertes Gemisch nach einem der Ansprüche 1 bis 3, umfassend mindestens ein Polyol, das aus der Gruppe bestehend aus: Erythrit, Mannit, Pentaerythrit, Xylit, Dulcit, Sorbit, Ribit, Maltit und Inosit ausgewählt wird.

5. Inertes Gemisch nach Anspruch 4, wobei das mindestens eine Polyol in einer Menge im Bereich von 1 bis 15 Gew.-%, bezogen auf das Gesamtgewicht des inerten Gemisches vorhanden ist.

6. Inertes Gemisch nach einem der Ansprüche 1 bis 5, umfassend mindestens ein anorganisches Salz, wobei das anorganische Salz aus mindestens einem Metall besteht, das aus der Gruppe bestehend aus Lithium, Natrium, Kalium, Calcium, Magnesium, Strontium, Barium, Titan, Vanadium, Chrom, Mangan, Eisen, Kobalt, Nickel, Kupfer, Zink und Aluminium ausgewählt wird und aus mindestens einem Anion, das aus der Gruppe bestehend aus einem Halogenid, einem Silikat und einem Sulfat ausgewählt wird.

**7.** Inertes Gemisch nach Anspruch 6, wobei das mindestens eine anorganische Salz in einer Menge im Bereich von 1 bis 15 Gew.-%, bezogen auf das Gesamtgewicht des inerten Gemisches, vorhanden ist.

**8.** Inertes Gemisch nach einem der Ansprüche 1 bis 7, das mindestens ein Nukleierungsmittel enthält.

**9.** Inertes Gemisch nach Anspruch 8, wobei das Nukleierungsmittel aus der Gruppe bestehend aus Kohlenstoffpulver, Metallpulver und Siliziumkarbid ausgewählt wird.

**10.** Inertes Gemisch nach Anspruch 8 oder 9, wobei das mindestens eine Nukleierungsmittel in Form von Teilchen mit einer Teilchengröße im Bereich von 1 bis 50 Mikron, die mit dem Laserdiffraktometrieverfahren gemäß der Norm ISO 13320: 2009 (E) gemessen wird vorhanden ist.

**11.** Inertes Gemisch nach Anspruch 10, wobei das mindestens eine Nukleierungsmittel in Form von Teilchen mit einer Größe im Bereich von 5 bis 20 Mikron vorhanden ist.

**12.** Inertes Gemisch nach einem der Ansprüche 8 bis 11, wobei das mindestens eine Nukleierungsmittel in einer Menge im Bereich von 2 bis 20 Gew.-%, bezogen auf das Gesamtgewicht des inerten Gemisches, vorhanden ist.

**13.** Verwendung des inerten Gemisches gemäß einem der Ansprüche 1 bis 12 zur Speicherung von Wärmeenergie.

**14.** Verwendung des inerten Gemisches nach einem der Ansprüche 1 bis 12 zur Speicherung von Wärmeenergie in einem Temperaturbereich von 40° C bis 65° C.

**15.** Verwendung des inerten Gemisches gemäß einem der Ansprüche 1 bis 12 als Phasenwechselmaterial.

## Revendications

**1.** Mélange inerte comprenant :

a. de 45 % à 99 % en poids, par rapport au poids total du mélange inerte, d'au moins un polyéther choisi dans le groupe constitué par le polyéthylène glycol (PEG) et le méthoxy polyéthylène glycol (mPEG) ; et
b. de 1 à 16 % en poids, par rapport au poids total du mélange inerte, d'au moins un composé hydroxylé choisi dans le groupe constitué par : le triméthylolpropane, le menthol, l'alcool néopentylique et le gaïacol.

**2.** Mélange inerte selon la revendication 1, dans lequel ledit au moins un polyéther a un poids moléculaire moyen compris entre 2 000 et 10 000 Da.

**3.** Mélange inerte selon la revendication 1 ou 2, dans lequel ledit au moins un composé hydroxylé est le triméthylolpropane.

**4.** Mélange inerte selon l'une quelconque des revendications 1 à 3, comprenant au moins un polyol choisi dans le groupe constitué par : l'érythritol, le mannitol, le pentaérythritol, le xylitol, le dulcitol, le sorbitol, le ribitol, le maltitol et l'inositol.

**5.** Mélange inerte selon la revendication 4, dans lequel ledit au moins un polyol est présent en une quantité comprise entre 1 et 15 % en poids, par rapport au poids total dudit mélange inerte.

**6.** Mélange inerte selon l'une quelconque des revendications 1 à 5, comprenant au moins un sel inorganique, ledit sel inorganique étant constitué d'au moins un métal choisi dans le groupe constitué par : le lithium, le sodium, le potassium, le calcium, le magnésium, le strontium, le baryum, le titane, le vanadium, le chrome, le manganèse, le fer, le cobalt, le nickel, le cuivre, le zinc et l'aluminium et d'au moins un anion choisi dans le groupe constitué par : un halogénure, un silicate et un sulfate.

**7.** Mélange inerte selon la revendication 6, dans lequel ledit au moins un sel inorganique est présent en une quantité comprise entre 1 et 15 % en poids, par rapport au poids total dudit mélange inerte.

**8.** Mélange inerte selon l'une quelconque des revendications 1 à 7, comprenant au moins un agent de nucléation.

**9.** Mélange inerte selon la revendication 8, dans lequel l'agent de nucléation est choisi dans le groupe constitué par la poudre de carbone, la poudre métallique et le carbure de silicium.

**10.** Mélange inerte selon la revendication 8 ou 9, dans lequel l'au moins un agent de nucléation est présent sous forme de particules dont la taille de particules est comprise entre 1 et 50 microns, mesurée par la méthode par diffraction laser selon la norme ISO 13320: 2009 (E).

**11.** Mélange inerte selon la revendication 10, dans lequel l'au moins un agent de nucléation est présent sous forme de particules dont une taille est comprise entre 5 et 20 microns.

**12.** Mélange inerte selon l'une quelconque des revendications 8 à 11, dans lequel l'au moins un agent de nucléation est présent en une quantité comprise entre 2 % et 20 % en poids, par rapport au poids total du mélange inerte.

**13.** Utilisation du mélange inerte selon l'une quelconque des revendications 1 à 12 pour accumuler de l'énergie thermique.

**14.** Utilisation du mélange inerte selon l'une quelconque des revendications 1 à 12, pour accumuler de l'énergie thermique dans une plage de température allant de 40 °C à 65 °C.

**15.** Utilisation du mélange inerte selon l'une quelconque des revendications 1 à 12 comme matériau à changement de phase.

**FIG. 1**

FIG. 2

FIG. 3

**FIG. 4**

EP 4 127 093 B1

**FIG. 5**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 110484213 A
- WO 2019058478 A

**Non-patent literature cited in the description**

- **PERRY'S.** Chemical Engineers' Handbook